# EUROPEAN PATENT APPLICATION

(11) **EP 4 398 460 A1**
(43) Date of publication of application: **10.07.2024**
(21) Application number: 23150506.6
(22) Date of filing: 05.01.2023
(51) Int. Cl.: H02K 7/14, H02K 9/06, H02K 5/20, H02K 9/14

(54) **DRIVE UNIT, ARM COMPONENT OF A KITCHEN MACHINE, AND HOUSE-HOLD APPLIANCE**

(71) Applicant: BSH Hausgeräte GmbH, 81739 München (DE)
(72) Inventor: Potocnik, David, 3214 Zrece (SI); Glisic, Zeljko, 3000 Celje (HR); Sedovsek, Aleksander, 3331 Nazarje (SI); Berzelak, Matej, 3334 Luce (SI)

(57) **Abstract**

Disclosed is a drive unit 1 of or for a household appliance. The drive unit 1 comprises a stator 11 and a rotor 12 of an electric motor 10, an impeller 20, and an air-guiding element 30. The air-guiding element 30 forms (alone or in combination with another component such as the stator 12) one or various passage/s extending along a radially outer surface S of the stator 11, through a respective gap G₁, G₂, G₃, G₄ delimited by the stator 11 and the air-guiding element 30, and to the impeller 20.

Further disclosed are an arm component 100 of a kitchen machine, and a household appliance respectively comprising such drive unit 1.

## Description

The present invention concerns a drive unit of or for a household appliance. The invention further concerns a household appliance and an arm component of a kitchen machine respectively comprising such drive unit.

Many commonly known household appliances integrate at least one drive unit comprising an electric motor in a housing. Therein, to provide a preferably small appliance, a space allocated for the drive unit is typically intended to be kept tight. On the other hand, the electric motor generates heat which may be detrimental to the various components of the household appliance (such as an electronics and/or the housing, for example), or which may even be harmful for a user of the household appliance. As a consequence, for construction of the household appliances, respective technical demands have to be considered, such as regarding a used material and/or a spatial arrangement of the various elements comprised by the appliance.

It was an object of the present invention to provide a technique simplifying the construction of preferably compact household appliances comprising an electric motor.

The object is achieved by a drive unit according to claim 1, by an arm component according to claim 8, and by a household appliance according to claim 9. Advantageous embodiments are disclosed in the dependent claims, the description and the figures.

A drive unit according to the present invention is a component of or for a household appliance, in particular, a kitchen machine (such as an electric food processor or a multi-purpose kitchen appliance), an electric blender, a stick blender or a handheld electric mixer kitchen appliance, for instance.

The drive unit comprises a stator and a (preferably internal) rotor of an electric motor, the rotor being configured to rotate about a rotor axis. The drive unit further comprises an impeller configured to rotate about the rotor axis so as to produce a heat dissipating air flow, thus to cool the electric motor. In particular, the impeller is advantageously fixed to a rotor shaft. Moreover, the drive unit comprises an air-guiding element at least a portion of which is arranged between the stator and the impeller.

Therein, the air-guiding element forms (alone or in combination with another component such as the stator) one or various passage/s extending along a radially outer surface of the stator, through a respective gap delimited by the stator and the air-guiding element, and to the impeller.

The number of said passages in particular may be at least two, at least three, or at least four.

In particular, on the stator's side, the gap or - if the air-guiding element forms various passages - at least one of the various gaps may at least partially be delimited by a portion of the radially outer surface and/or by an edge thereof. Additionally or alternatively, the gap or - in case of various passages - (the) at least one of the gaps may at least partially be delimited, on the air-guiding element's side, by a radially inner surface of the air-guiding element and/or by an edge of said radially inner surface.

As is to be noted, if not otherwise indicated, the terms "radial", "axial" and "circumferential" in this document always relate to the rotor axis, i.e., to a designated axis of rotation of the rotor. In particular, the radially outer surface of the stator thus is a stator's surface facing away from the rotor, and the radially inner surface of the air-guiding element is a surface of this element which faces (directly or inclined thereto) the rotor axis.

The passage/s thus connect/s a space, which in radial direction is delimited by (at least a region of) the radial outer surface of the stator, with the impeller. As a consequence, in operation of the electric motor, an air flow generated by the rotating impeller passes the radial outer surface of the stator, thereby cooling the stator from the radial outer side. Moreover, a flow resistance of an air stream likewise generated by the rotating impeller and running through the radial inner space of the stator, in which the rotor rotates, is reduced. As a consequence, a velocity of the air stream and, thereby, an air stream rate are increased, which improves the heat dissipating and thus cooling effect of the air-guiding element.

Due to the thus improved heat dissipation, consideration of disadvantageous heat effects on further components of the household appliance, such as on a housing and/or on electronic parts, can be reduced when constructing the household appliance. The construction is thus simplified. In particular, cheaper materials (such as plastic) having less heat resistance can be used (in particular for the housing) and/or the household appliance's component comprising the drive unit or even the household appliance itself can be produced more compact, without disadvantageously affecting other components such as an electronics or a gear system of the household appliance, i.e., without imparing a stable performance thereof. In addition, the improved heat dissipation reduces a temperature of exterior components of the household appliance, such as a housing, a grip and/or a tool thereof. As a consequence, the operation of the household appliance results to be more comfortable for a user, and even possible heat injuries may be effectively prevented.

According to advantageous embodiments, the drive unit according to the present invention may be integrated or designated to be integrated in an arm component of a kitchen machine, in particular in an arm component according to an embodiment of the present invention:
An arm component according to the present invention accordingly is a component of a kitchen machine (such as an electric food processor or a multi-purpose kitchen appliance), which component comprises a drive unit according to an embodiment of the present invention, a gear system configured to be driven by the drive unit, and a housing which at least partially encases the drive unit and the gear system.

The housing may preferably be at least partially made of plastics.

The gear system may be configured to hold a tool for processing food contained in a receptacle, wherein in an orientation designated for use of the kitchen machine, the tool may advantageously extend from above into the receptacle.

In particular, the arm component may be (possibly pivotably) attached or may be configured to be (possibly pivotably) attached to a base component of the kitchen machine.

A household appliance according to the present invention comprises a drive unit according to an embodiment of the present invention.

The household appliance may in particular be a kitchen appliance such as an electric blender, a stick blender or a handheld electric mixer, or such as a kitchen machine (e.g., an electric food processor or a multi-purpose kitchen appliance). Such kitchen machine may comprise a base component and, (advantageously pivotably) attached thereto, an arm component according to an embodiment of the present invention.

The base component may advantageously provide a foot of the kitchen machine. In particular, the base component may comprise a seat surface a receptacle is to be positioned on during processing food contained in the receptacle with the kitchen machine.

Preferably, the air-guiding element is arranged on a suction side of the impeller, such that the air flow generated by the rotating impeller is sucked from the stator to the impeller.

In particular, the gap or - in case various passages are formed - at least one of the gaps is preferably formed at an axial side of the air-guiding element which side faces away from the impeller.

According to advantageous embodiments of the present invention, the gap or - if the air-guiding element forms various passages - the gaps together extend over at least a quarter or at least a third of a circumference of the outer surface of the stator. Accordingly, in operation of the electric motor, the stator is flushed in at least a quarter or at least a third of its circumference by the air flow/s generated by the rotating impeller and flowing along the passage/s. As a consequence, a particularly effective cooling is achieved.

In particular, the gap or - in case the air-guiding element forms various passages - at least one of the gaps may have a length (measured in circumferential direction of the stator) of at least 1cm or at least 1.3cm or at least 3cm or at least 4cm.

Advantageously, the gap or - in embodiments where the air-guiding element forms various passages - at least one of the gaps may have a width of at least 3mm or at least 4.5mm or at least 6mm. Therein, the width is measured at a widest region of the gap and orthogonally to the stator surface or to the stator edge respectively delimiting the respective gap and facing the air-guiding element. In particular, the width is understood to be the greatest distance appearing between points A on the air-guiding element's surface or air-guiding element's edge delimiting the gap and points B of the stator edge or the stator surface respectively delimiting the gap and facing the air-guiding element, the distance measured orthogonally to said surface or edge of the stator.

Such length and/or width of the gap/s facilitate that the impeller generates an air flow having a particularly advantageous cooling effect.

Additionally or alternatively, the length of the (at least one) gap may be at most 7cm or at most 5cm, and/or the width of the (at least one) gap may be at most 8mm or at most 7mm.

Such dimension/s facilitate an advantageous compact shape of the drive unit.

According to advantageous embodiments, a portion of the passage or - in embodiments where the air-guiding element forms various passages - of at least one of the passages extends along a corner formed by the air-guiding element and running in axial direction. In particular, the gap or - in embodiments where the air-guiding element forms various passages - at least one of the gaps may be formed at an axial end of the at least one corner. According to advantageous embodiments, (disregarding a possible chamfering) the at least one corner is rectangular.

Additionally or alternatively, the gap or - in case of various passages - at least one of the gaps may have a straight, longitudinal shape. Such gap may in particular be delimited by at least two parallel surfaces or edges (in particular of a respective one of the stator and/or the air-guiding element).

These embodiments provide for an advantageous air flow while at the same time utilising particularly effectively an installation space within a housing of the household appliance.

The air-guiding element may comprise at least one portion extending in axial direction into a radial periphery of the stator. Such portion may thus face a respective radially outer surface region of the stator. In such embodiments, the passage or - in embodiments where various passages are formed - at least one of the various passages may extend between such at least one portion of the air-guiding element and said surface region of the stator. Accordingly, the respective passage runs through a channel formed between the stator and said portion of the air-guiding element. With such a channel, a particularly straight and fast air flow having a particularly good cooling effect can be generated.

In what follows, preferred embodiments of the present invention are explained with respect to the accompanying drawings. As is to be understood, the various elements and components are depicted as examples only, and they may be facultative and/or combined in a manner different than that depicted. Reference signs for related elements are used comprehensively and not defined again for each figure.

Shown is schematically in
- Fig. 1a:: an exemplary embodiment of a drive unit according to the present invention in a sectional view;
- Fig. 1b:: the drive unit of Figure 1a as installed and in a cross section;
- Fig. 1c:: the drive unit of Figures 1a, 1b in perspective view and without its rotor;
- Fig. 2a:: an arm component according to an exemplary embodiment of the present invention in perspective view; and
- Fig. 2b:: a cross section of the arm component of Figure 2a.

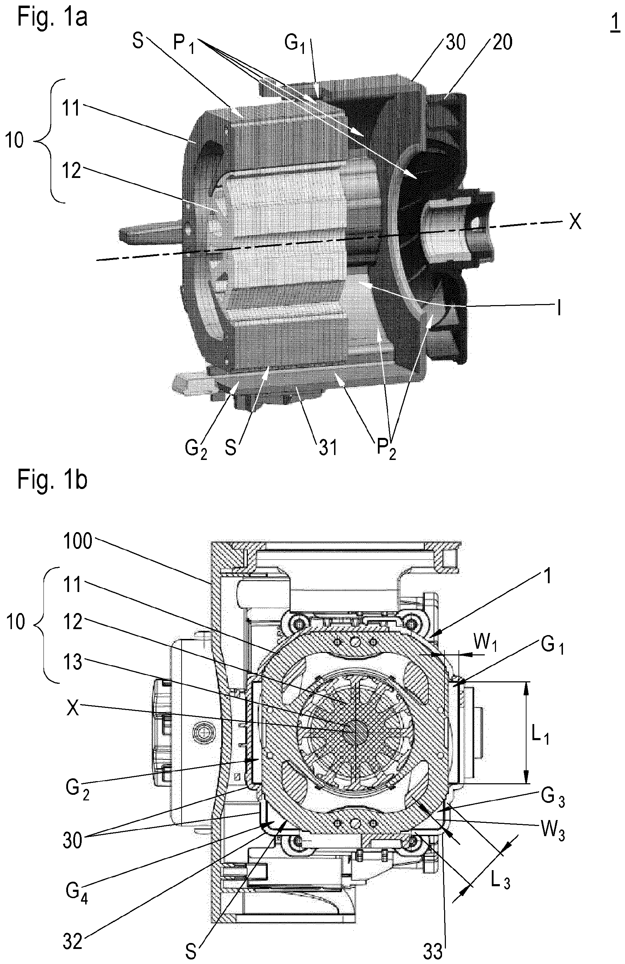

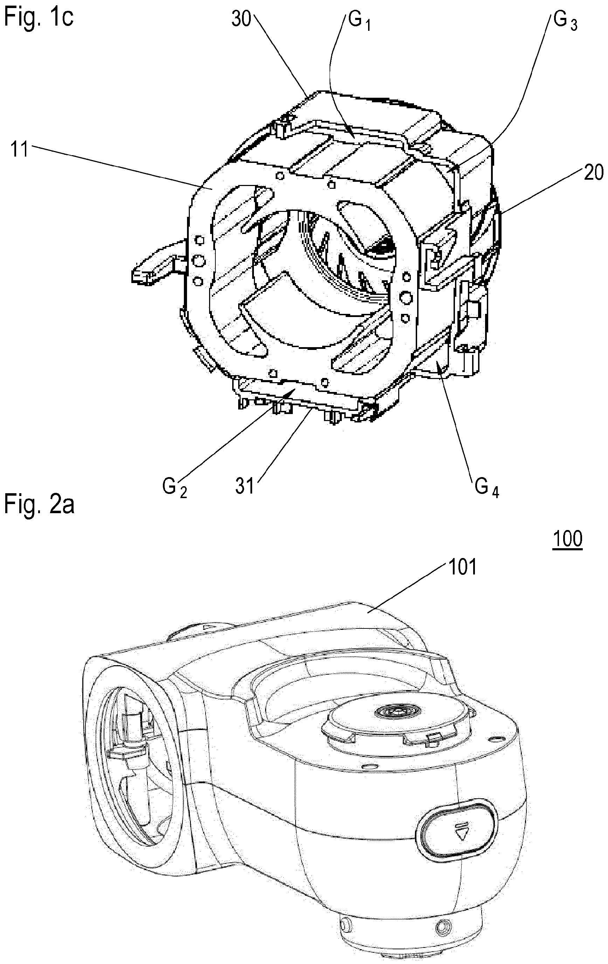

Figure 1a presents a sectional view providing insight into a drive unit 1 according to an exemplary embodiment of the present invention. The drive unit 1 comprises a rotor 12 of an electric motor 10, the rotor 12 configured to rotate about a rotor axis X; a rotor shaft connected to the rotor is omitted in Figure 1. The drive unit 1 further comprises a stator 11 of the electric motor 10. Therein, the rotor 12 is an internal rotor, the stator 11 thus radially surrounds the rotor 12 (with respect to the rotor axis X).

Additionally, the drive unit 1 comprises an impeller 20 which is fixed to the (not shown) rotor shaft and which is thereby likewise configured to rotate about the rotor axis X. Therein, the rotor 12 and the stator 11 are preferably arranged on a suction side of the impeller 20. In operation, i.e., when the impeller rotates, it generates a heat dissipating air flow through the rotating rotor.

In axial direction (i.e., in direction of the rotor axis X), an air-guiding element 30 of the drive unit 1 is arranged partially between the impeller 20 and both the rotor 12 and the stator 11. Therein, the air-guiding element 30 forms various passages P₁, P₂, two of which are visible in Figure 1a. The passages P₁, P₂ each extend along a radial outer surface S of the stator 11 and to the impeller 20, thereby running through a respective gap G₁, G₂ delimited by the stator 11 and the air-guiding element 30. Therein, one of the gaps (in Figure 1a referenced as G₁) is delimited by an edge of the stator's outer surface S and an edge of the air-guiding element 30, while another one of the gaps (in Figure 1a referenced as G₂) is delimited by the outer surface S of the stator 11 and a radially inner surface of a portion 31 of the air-guiding element 30, which portion 31 in the exemplary embodiment shown extends in axial direction into a radial periphery of the stator 11.

As seen in Figure 1a, the passages P₁, P₂ each further run through an interspace I formed axially between the impeller 20 and both the stator 11 and the rotor 12. In radial direction, the interspace I is delimited by the air-guiding element 30.

The passages P₁, P₂ therefore cause an air flow generated by the rotating impeller 20 to pass the radially outer surface S. Accordingly, heat is dissipated also from a radial outer environment of the stator 11. Moreover, as a flow resistance is reduced by the passages P₁, P₂, a velocity of the air stream through the rotor 12 is increased.

As a consequence, heat dissipation from the stator and the rotor is improved, such that the production of a household appliance containing the drive unit 1 is simplified, in particular with regard to appropriate positions of electronic components and a material of a housing of the household appliance, while the appliance itself can be kept compact.

Figure 1b depicts the drive unit 1, installed in a household appliance 100 such as a kitchen machine, in a cross section along a plane orthogonal to the rotor axis X being a centre axis of a rotor shaft 13.

As depicted in Figure 1b, the air-guiding element 30 forms two rectangular (albeit chamfered) corners 32, 33 running in axial direction, whereby further gaps G₃, G₄ are formed between the stator 11 and the air-guiding element 30, the gaps G₃, G₄ having an essentially triangular shape.

Accordingly, respective passages extend along the radially outer surface S of the stator 11, through said gaps G₃, G₄, along a respective one of the corners 32, 33, and to the impeller (not visible in Figure 1b). Therein, as apparent from Figure 1c, the gaps G₃, G₄ each are formed at a respective axial end of a respective one corner 32, 33.

As can be further taken from Figure 1b, in a cross section taken orthogonal to the rotor axis X, the gaps G₁ and G₂ each have a straight, longitudinal shape.

Therein, the gap G₁ has a length L₁ (measured in circumferential direction of the stator 11) and a width W₁ (measured at the widest region of the gap G₁ and orthogonally to the stator edge delimiting the gap G₁ and facing the air-guiding element 30). Preferably, L₁ ≥ 3cm or even L₁≥ 4cm holds. Additionally or alternatively, W₁ ≥ 3mm or W₁ ≥ 4mm may preferably hold. In the exemplary embodiment shown, the gap G₂ has the same width and length, respectively, as the gap G₁.

As further indicated in Figure 1b, the gap G₃ has a length L₃ (measured in circumferential direction of the stator 11) and a width W₃ (measured at the widest region of the gap G₃ and orthogonally to the stator edge delimiting the gap G₃ and facing the air-guiding element 30). Preferably, L₁ ≥ 1 cm or even L₁≥ 1.3cm holds. Additionally or alternatively, W₃ ≥ 4.5mm or W₃ ≥ 6mm may preferably hold. In the exemplary embodiment shown, the gap G₄ has the same width and length, respectively, as the gap G₃.

In Figure 1c, the drive unit 1 of Figures 1a, 1b is shown in perspective view and without the rotor, whereby an insight into the space encompassed by the stator and the air-guiding element 30 is given and the construction of the stator 11 and the air-guiding element 30 is further illustrated.

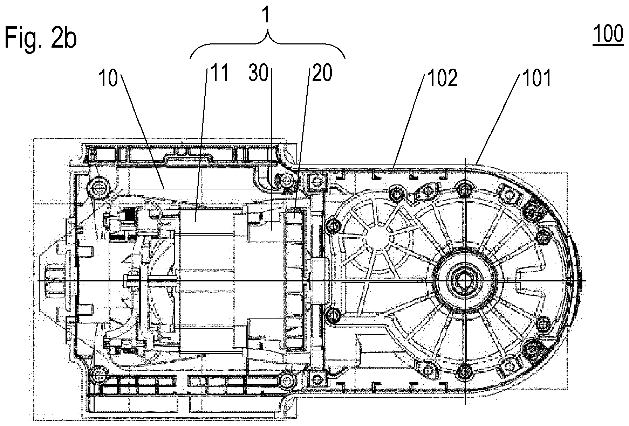

Figure 2a shows an arm component 100 according to an exemplary embodiment of the present invention in perspective view. In the case depicted, the arm component is a component of a kitchen machine, and it is configured to be pivotably mounted to a base of the kitchen machine (not shown). The arm component 100 comprises a housing 101 encasing, in particular, a gear unit 102 and a drive unit 1 according to an embodiment of the present invention, as is seen in Figure 2b showing a longitudinal section of the arm component 100.

Disclosed is a drive unit 1 of or for a household appliance. The drive unit 1 comprises a stator 11 and a rotor 12 of an electric motor 10, an impeller 20, and an air-guiding element 30. The air-guiding element 30 forms (alone or in combination with another component such as the stator 11) one or various passage/s extending along a radially outer surface S of the stator 11, through a respective gap G₁, G₂, G₃, G₄ delimited by the stator 11 and the air-guiding element 30, and to the impeller 20.

Further disclosed are an arm component 100 of a kitchen machine, and a household appliance respectively comprising such drive unit 1.

### Reference signs

- 1: drive unit

- 10: electric motor
- 11: stator
- 12: rotor
- 13: rotor shaft

- 20: impeller

- 30: air-guiding element
- 31: portion of air-guiding element
- 32: corner
- 33: corner

- 100: arm component
- 101: housing
- 102: gear system

- G₁: gap
- G₂: gap
- G₃: gap
- G₄: gap
- I: axial interspace between stator 11 and impeller 20
- L₁: length of gap G₁
- L₃: length of gap G₃
- P₁: passage
- P₂: passage
- S: radially outer surface of the stator 11
- W₁: width of gap G₁
- W₃: width of gap G₃
- X: rotor axis

## Claims

1. Drive unit (1) of or for a household appliance, the drive unit comprising
- a stator (11) and a rotor (12) of an electric motor (10),
- an impeller (20),
- and an air-guiding element (30) arranged at least partially between the stator (11) and the impeller (20),
wherein the air-guiding element (30) forms one or various passage/s (P₁, P₂) extending along a radially outer surface (S) of the stator (11), through a respective gap (G₁, G₂, G₃, G₄) delimited by the stator (11) and by the air-guiding element (30), and to the impeller (20).

2. Drive unit (1) according to claim 1, wherein in circumferential direction, the gap/s (G₁, G₂, G₃, G₄) together extend over at least a quarter or at least a third of a circumference of the radially outer surface (S) of the stator (11).

3. Drive unit according to one of claims 1 or 2, wherein the gap or - in case of various passages - at least one of the gaps (G₁, G₂, G₃, G₄) has a width (W₁, W₃) of at least 3mm or at least 4.5mm or at least 6mm.

4. Drive unit according to one of the preceding claims, wherein in circumferential direction, the gap or - in case of various passages - at least one of the gaps (G₁, G₂, G₃, G₄) has a length (L₁, L₃) of at least 1cm or at least 1.3cm or at least 3cm or at least 4cm.

5. Drive unit (1) according to one of the preceding claims, wherein the air-guiding element (30) forms at least one corner (32, 33) running in axial direction, wherein the gap or - in case of various passages - at least one of the gaps (G₃, G₄) is formed at an axial end of the at least one corner (32, 33).

6. Drive unit (1) according to one of the preceding claims, wherein in a cross section taken orthogonal to a rotor axis (X) of the rotor (12), the gap or - in case of various passages (P₁, P₂) - at least one of the gaps (G₁, G₂) has a straight, longitudinal shape.

7. Drive unit (1) according to one of the preceding claims, wherein the passage or - in case of various passages - at least one of the various passages (P₂) runs between a region of the stator's radially outer surface (S) and an air-guiding element's portion (31) extending in axial direction into a radial periphery of the stator (11).

8. Arm component (100) of a kitchen machine, the arm component comprising a drive unit (1) according to one of the preceding claims, a gear system (102) configured to be driven by the drive unit, and a housing (101) encasing the drive unit (1) and the gear system (102).

9. Household appliance comprising a drive unit (1) according to one of claims 1 to 7.

10. Household appliance according to claim 9, the household appliance being a kitchen machine comprising a base component and, attached thereto, an arm component (100) according to claim 8.
